# EUROPEAN PATENT SPECIFICATION

(11) **EP 0 811 282 B1**
(45) Date of publication and mention of the grant of the patent: **25.09.2002**
(21) Application number: 96904418.9
(22) Date of filing: 20.02.1996
(51) Int. Cl.: H04L 9/32

(54) **ELECTRONIC TRANSACTION SYSTEM AND METHOD**
VORRICHTUNG UND VERFAHREN FÜR ELEKTRONISCHE TRANSAKTIONEN
SYSTEME ET PROCEDE DE TRANSACTION ELECTRONIQUE

(30) Priority: 24.02.1995 SE 9500697
(43) Date of publication of application: 10.12.1997
(73) Proprietor: TELIA AB, 123 86 Farsta (SE)
(72) Inventor: HASTAD, Johan, S-182 74 Stocksund (SE)
(74) Representative: Hopfgarten, Nils
(86) International application number: SE9600226
(87) International publication number: WO96026586

(56) References cited:
- EP-A- 0 538 216
- EP-A- 0 616 447
- WO-A-93/03562
- US-A- 4 995 082

## Description

The present invention relates to a system and method for conducting secure electronic transactions and verification thereof by electronic signature, more precisely the invention relates to a transaction system and a method including at least one smart card, an authorization station and at least one transaction station, in which asymmetric cryptographic codes are used for transmission and verification of messages, and in which a first cryptographic key is held only in said authorization station, a second cryptographic key is held only in said authorization station and said smart card, and a PIN, xi, is assigned by said authorization station to said smart card and held only by said authorization station and said smart card, said authorization station issuing at least one transaction certificate to said smart card containing encrypted data which includes a number which can only be derived by operating on said PIN with said second cryptographic key, and said transaction station including means adapted to verify that said smart card bears said second cryptographic key.

The use of smart cards, i.e. plastic cards containing a microprocessor and memory, as a means of facilitating financial and other transactions is well known. A sum of money may be transferred to such a card and stored in electronic form, and/or such cards may hold a personal identity number (PIN) which can be used to authorize a transaction.

Two distinct problems can be identified with the use of smart cards for facilitating transactions:
- data security, and
- transaction verification.

These problems may be overcome by the use of asymmetric coding algorithms.

A symmetric coding algorithm employs the same key for encrypting and decrypting data. An asymmetric coding algorithm uses two distinct keys, the first for encoding data and the second for decoding data. The use of asymmetric algorithms permits an encoding key to be made publicly available, and permits any person to transmit information in a secure form to the holder of the decoding key. Alternatively, a unique, verifiable and secure electronic signature can be generated by making a decoding algorithm publicly available while maintaining the secrecy of the encoding algorithm. This enables a PIN to be read, decoded and verified, but prevents the creation of a valid coding for a false PIN. The identity of a user can thus be confirmed by confirming that he knows an encoding key without passing on knowledge of the encoding key.

WO 9303562 discloses a method for generating and verifying a digital signature of a message m. This method requires a pair of corresponding public and secret keys (y and x) for each signer, as well as a pair of public and secret values (r and k) generated for each message by the signer. The public value r is calculated according to the rule r=(gk mod p) mod q. A value s is then selected according to the rule s=k-1 (H(m)+xr) mod q where H is a known conventional hashing function. The message m, along with the signature (r,s) is then transmitted. When the transmitted signal is received a verification process is provided. The received values of r and s are tested to determine whether they are congruent to 0 mod g. Additionally, r is tested to determine whether it is equal to v mod q, where v is computed from r, s, m and y. For legitimately executed signatures, v=gk mod p.

A further method for electronic transaction verification is described in US patent number 4,995,082. This method is working with smart cards and is using identification data coded into the cards by a card-issuing centre including subscriber-related public keys and stored in the respective chip cards along with along with private keys, whereby random number-dependent check data are exchanged between the subscribers. However, the complexity of the encoding and decoding algorithms creates problems when used in conjunction with smart cards.

To use such systems effectively with smart cards requires the development of coding and decoding techniques which can be handled by the limited processing and memory available on smart cards.

The present invention employs an improved form of transaction processing, using cryptographic algorithms which are sufficiently simple to be used on smart cards and which at the same time provide for secure data encryption and secure transaction verification by means of electronic signatures. This in turn facilitates the conduct of secure off-line transactions, i.e. avoids the need to confirm a transaction at the time it is made using a telecommunications link. This enables a shop, for example, to complete and confirm money transfers at a convenient time after completion of a transaction in which a smart card is completed.

The successful and secure operation of the present invention rests on the assumption that banks are trustworthy and smart cards are secure.

According to a first aspect of the present invention, there is provided a transaction system of the kind defined in the introductory portion and having the characterizing features of claim 1.

Thus in the system according to the invention said first and second cryptographic keys are algorithms wherein,
- g₀ is a generator, and
- g₁ = g₀^{x}, where x is a random number, and
a number hᵢ = g₁^{xi}, is at least known to said transaction station. Said smart card includes first and second counter means, said first counter means is arranged to hold a number representative of a total transaction limit, and said second counter means is arranged to hold a number indicating how many times the value of said first counter has been incremented.

Said first and second counters may be adapted to be incremented in response to the receipt of a message from said authorization station, and said first counter is adapted to be decremented in response to a message received from a transaction station.

Preferably each of said transaction certificates bears a unique number assigned by said authorization station.

According to a second aspect of the present invention there is provided a method of, conducting off-line transactions of the kind defined in the introductory portion and having the characterizing features of claims 7.

Thus in the method according to the invention said first and second cryptographic keys are algorithms, and
- g₀ is a generator, and
- g₁ = g₀^{x}, where x is a random number, and
a number hᵢ = g₁^{xi}, is at least known to said transaction station. Said smart card includes first and second counter means, said first counter means is holding a number representative of a total transaction limit, and said second counter means is holding a number indicating how many times the value of said first counter has been incremented.

Said first and second counters may be incremented in response to a message received from said authorization station, and said first counter may be decremented in response to a message received from a transaction station.

Preferably each of said transaction certificates bears a unique number assigned by said authorization station.

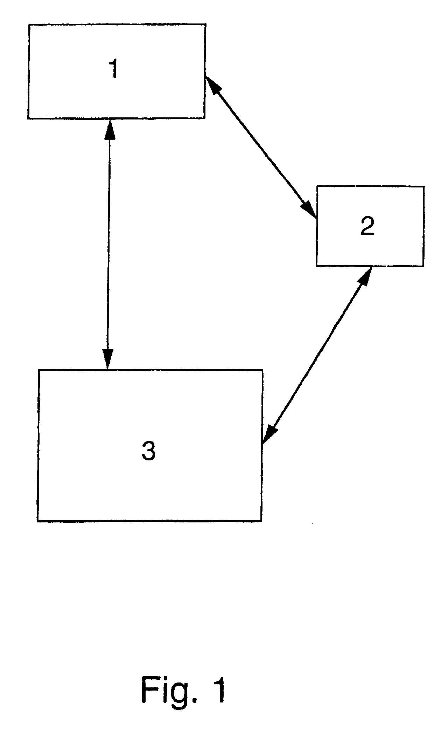

Embodiments of the invention will now be described, by way of example, with reference to the single figure (Figure 1) of the accompanying drawings which diagrammatically illustrates, in the form of a block diagram, a transaction system according to the present invention.

As illustrated in Figure 1, the transaction system includes an authorization station, or bank, 1, a smart card 2 and a transaction station, or shop, 3. The system involves, in a manner to be subsequently outlined, two-way transmissions between the smart card 2 and both the bank 1 and shop 2, and between the bank 1 and shop 3.

With the present invention, it is assumed that only a limited number of conditions need to be taken into account, for example:
- the bank concerned is beyond reproach and can be unconditionally trusted; and
- smart cards are inpenetratable.

The aim of the present invention is to provide a secure, paperless and signatureless credit card system.

It is further assumed that discrete algorithms are difficult and that a good hash function 'H' is available for use in the secure transaction system.

The information "I know the discrete algorithm of "h" for the generator "g" and represent the message "m" is constituted by the message:
z, r, m,
where H (h,z,m) = a och g^{r} = hz^{a}.

A person knowing the discrete algorithm "x" of "h" may choose "w" at random, compute z = g^{v} and then calculate "a" and respond r = x + aw. It is assumed, with the present invention, that this is the only way to produce such combinations of numbers. It can be assumed that there are discrete algorithms in GF(p), where "p" comprises 512 bits and that a sub-group of the prime number order "q" has been selected having a magnitude of approximately 2¹⁴⁰.

In the establishment of a transaction arrangement for a client, the bank concerned will choose a random number "x" for the client and a generator g₀. The bank publishes g₀ och g = g₀^{x}. The number "x" is known only to the bank and is, therefore, the only secret information used by the transaction system.

Thus, any person wishing to obtain a smart card for use in the transaction system of the present invention, i.e a prospective user "Uᵢ" of the system, the person concerned will visit the bank and provide any necessary personal information that the bank may require for the purposes of identifying the individual concerned. When such formalities are completed, the user "Uᵢ" will be provided with a smart card containing a secret number, i.e. a PIN, "xi". The PIN "xi" is stored by, and is only known to the bank, but a number "hᵢ" which is equal to " g₁^{xi}" is known to everybody, i.e. is common knowledge.

It will, therefore, be seen from the foregoing that the "g₀" algorithm of "hᵢ" is known only to the bank, whereas he user "Uᵢ" only knows the algorithm. Clearly, the bank also know the algorithm, but third parties know neither.

The smart card incorporates a counter for indicating how much money is held by the smart card, i.e. the amount of money held in the wallet of the user "Uᵢ". In addition, the smart card incorporates a further counter which indicates the number of times the smart card has been loaded, i.e. the number of times that money has been added to the user's wallet.

When adding money to the smart card, the bank notifies the user "Uᵢ" that the balance of the smart card may be increased by K crowns, i.e may be increased by a number "s". The bank will, therefore, transmit a message to the smart card which includes the following data:
z, r, s and K,
where
H (hᵢ, z, s, K) = a, a good hash function;
g₀^{r} = hᵢz^{a}; and
s is the number held in the further counter referred to above.

The smart card checks that the number "s" is the right value for the further counter and that the equation is satisfied. If the equation is satisfied, the further counter will be incremented by one.

The procedure that is followed when making a payment for goods, or services, involves the bank in giving a certificate to the user "Uᵢ" concerned which may contain information "c" about maximum amounts and the date (or may be empty, if desired). This certificate has the form
hᵢ, z, r, c
where
H (hᵢ,z,c) = a, a good hash function; and
g₀^{r} = hᵢz^{a}.

The bank can select these certificates such that each "z" is unique. This may be effected in a manner whereby the bank only stores a bit vector specifying whether "z" has been selected. It should be noted that this certificate need not be secret and may be stored in an adjacent electrical device having more memory. When paying, the customer sends a certificate, together with the necessary proof that he knows the g₁ algorithm of hᵢ and the message "m" that he can pay. This message indicates the payee, time and amount, and is sent as
hᵢ, z, r, c, Z, R, m
where
H (hᵢ,z,c) = a, a good hash function;
g₀^{r} = hᵢz^{a};
H (hᵢ,Z,m) = A; and
gᵢ^{R} = hᵢZ^{A}.

The shop checks this and accepts.

When cashing the money, the shops sends a message that it has received the money specified in "m", to the bank, who credits this sum to the account of the shop. Furthermore, the bank stores the couple "z,m" and checks that it has a previous couple with the same "z". If this is verified, the bank also checks that "m" is the same. If so, it argues with the shop and otherwise with the user "Uᵢ" whose identity may be seen from hᵢ.

It will be obvious to persons skilled in the art that the foregoing transaction system is a simplified version of Brands' smart card solution. The system is in a very small extent anonymous but to a certain extent. A shop only sees hᵢ and this is a pseudonym which does not mean anything more than a face. One recognizes it when one sees it but one does not know what it means. Neither does the bank following the protocol see where the money goes for honest people, it just stores (z,m) and it does not know where "z" came from. It is only when "z" appears a second time that it checks the identity.

If it can reasonably be assumed that anybody who is not aware of a discrete algorithm cannot produce a good certificate for a certain number, then the system should be secure. Obviously, it may be possible for a dishonest person to select an "hᵢ", but if he does not know both of the discrete algorithms with the base g₀ and gᵢ, then it will not be possible for him to buy anything. If he has knowledge of both algorithms, then he knows "x" and can act as a bank. However, it is always the case that whoever penetrates the secret information of a bank can act as a bank.

The most complicated calculation of the smart card is g^{v} for g = g₀, eller g₁ and a number "w" of magnitude "q". This is done, on the one hand, to verify that it is the bank who asks it to put in money and, on the other hand, when it is used to buy goods, or services. It should be noted that, in the latter case, this may be done a long time in advance and "z" may be transmitted from the smart card well in good time. When the message "m" arrives later, the smart card only has to calculate H (hᵢ,m,z) = a, and xᵢ+aw. When money from the bank is to be added, the updating does not have to occur immediately but the smart card can take its time to check if it will be possible.

The handling of the money may give rise to difficulties. The user will probably require the use of a number of certificates. These are of a size above approximately 652 bits (hᵢ does not have to be stored and "c" is small). What is needed is "z" and "r". This means that a few dozen may be accommodated on the smart card and the rest may be stored in an unsafe place.

## Claims

1. A transaction system including at least one smart card, an authorization station and at least one transaction station, in which asymmetric cryptographic codes are used for transmission and verification of messages, and in which:
- a first cryptographic key is held only in said authorization station,
- a second cryptographic key is held only in said authorization station and said smart card, and
- a PIN, xi, is assigned by said authorization station to said smart card and held only by said authorization station and said smart card,
said authorization station issuing at least one transaction certificate to said smart card containing encrypted data which includes a number which can only be derived by operating on said PIN with said second cryptographic key, and said transaction station including means adapted to verify that said smart card bears said second cryptographic key, **characterized in that** said first and second cryptographic keys are algorithms wherein,
- g0 is a generator, and
- g1 = g0^{x}, where x is a random number, and
a number hᵢ= g1^{xi}, is at least known to said transaction station,
**in that** said smart card includes first and second counter means, said first counter means being arranged to hold a number representative of a total transaction limit, and said second counter means being arranged to hold a number indicating how many times the value of said first counter has been increased, and
**in that** said authorization station is adapted to add money to said smart card by transmitting a message to said smart card including the following data:
z, r, s and K
where:
- H (hᵢ, z, s, K) = a, is a hash function,
- g0^{r} = hᵢz^{a}, and
- s is the number held on said second counter means,
said smart card being adapted to verify that s corresponds to the number stored on said second counter means, and after verification, to increment said first counter means by K and said second counter means by 1.

2. A system as claimed in claim 1, **characterized in that** said first and second counters are adapted to be incremented in response to the receipt of the message from said authorization station, and **in that** said first counter is adapted to be decremented in response to a message received from said transaction station.

3. A system as claimed in claims 1 or 2, **characterized in that** each of said transaction certificates bears a unique number assigned by said authorization station.

4. A system as claimed in any previous claim, **characterized in that** said authorization station is designed for location in a bank, said at least one transaction station is designed for location in a shop, and said total transaction limit is a sum of money.

5. A system as claimed in claim 4, **characterized in that** said transaction certificates contain the following information.
hᵢ, z, r, c
where:
- H (hᵢ, z, c) = a is a hash function,
- g0^{r} = hᵢz^{a},
- z is a unique number stored at said bank and identifying the transaction certificate to which it is attached, and
- c is a message containing information on transaction limits and dates.

6. A system as claimed in claim 5, **characterized in that** at least some of said transaction certificates are stored on electronic storage means separated from said smart card.

7. A method of conducting off-line transactions employing at least one smart card, an authorization station and at least one transaction station, in which asymmetric cryptographic codes are used for transmission and verification of messages, and in which:
- a first cryptographic key is held only in said authorization station,
- a second cryptographic key Is held only in said authorization station and said smart card, and
- a PIN, xi is assigned by said authorization station to said smart card and held only by said authorization station and said smart card.
said authorization station is issuing at least one transaction certificate to said smart card containing encrypted data which includes a number which can only be derived by operating on said PIN with said second cryptographic key, and said transaction station is verifying that said smart card bears said second cryptographic, **characterized in that** said first and second cryptographic keys are algorithms, and
- g0 is a generator,
- g1 = g0^{x}, where x is a random number,
and
a number hᵢ= g1^{xi}, is at least known to said transaction, and
said smart card includes first and second counter means, said first counter means is holding a number representative of a total transaction limit, and said second counter means is holding a number indicating how many times the value of said first counter has been incremented, and
**in that** money is added to said smart card by said authorization station by transmitting a message to said smart card including the following data:
z, r, s, and K
where:
- H (hᵢ, z, s, K) = a, is a hash function,
- g0^{r} = hᵢz^{a}, and
- s is the number held on said second counter means,
and said smart card is verifying that a corresponds to the number stored on said second counter means, and is after verification, incrementing said first counter means by K and said second means by 1.

8. A method as claimed in claim 7, **characterized by** incrementing said first and second counter means in response to the message received from said authorization station, and decrementing said first counter means in response to a message received from the transaction station.

9. A method as claimed in claims 7 or 8, **characterized in that** each of said transaction certificates is provided with a unique number assigned by said authorization station.

10. A method as claimed in claims 7-9, **characterized by** designing said authorization station for location in a bank, and said at least one transaction station for location in a shop, said total transaction limit being a sum of money.

11. A method as claimed in claim 10, **characterized by** providing said transaction certificates with the following information:
hᵢ, z, r, c
where:
- H (hᵢ, z, c) = a is a hash function,
- g0^{r} = hᵢz^{a},
- z is a unique number stored at said bank and identifying the transaction certificate to which it is attached, and
- c is a message containing information on transaction limits and dates, and by storing z at said bank.

12. A method as claimed in claim 11, **characterized by** storing at least some of said transaction certificates on electronic storage means separated from said smart card.

13. A method as claimed in claim 11 or 12, **characterized in that** a transaction is performed by electronic transfer of a transaction certificate from said smart card to said transaction station, in a form containing the following data:
hᵢ, z, r, c, Z, R, m
where:
- H (hᵢ, z, c) = A,
- g0^{r} = hᵢz^{a};
- H (hᵢ, z, c) = A,
- g0^{R} = hᵢz^{A}.
- m is a message indicating the money to be transferred from the smart card to the shop
and the transaction station verifying the validity of the relationships and accepting the transaction.

14. A method as claimed in claim 13, **characterized by** the transaction station, at a convenient time after completion of a transaction, transmitting a message to the bank indicating that the money m is to be transferred to the shop's credit, pursuant to a transaction certificate bearing a unique number z.

15. A method as claimed in claim 14, **characterized by** storing the values of z and m at the bank and using z and m, if necessary, to verify the validity of the transaction to which they relate.

## Patentansprüche

1. Transaktionssystem, das wenigstens eine Smartcard, eine Berechtigungsstation und wenigstens eine Transaktionsstation aufweist, in dem asymmetrische kryptografische Codes für das Senden und das Prüfen von Meldungen verwendet werden, und in dem:
- ein erster kryptografischer Schlüssel nur in der Berechtigungsstation gehalten wird,
- ein zweiter kryptografischer Schlüssel nur in der Berechtigungsstation und der Smartcard gehalten wird, und
- ein PIN, xi, durch die Berechtigungsstation der Smartcard zugeordnet wird und nur durch die Berechtigungsstation und die Smartcard gehalten wird,
wobei die Berechtigungsstation wenigstens ein Transaktionszertifikat der Smartcard ausstellt, das verschlüsselte Daten enthält, die eine Zahl einschließen, die nur durch Bearbeiten des PIN mit dem zweiten kryptografischen Schlüssel abgeleitet werden kann, und wobei die Transaktionsstation Mittel einschließt, die dazu ausgebildet sind, zu überprüfen, daß die Smartcard den zweiten kryptografischen Schlüssel hält, **dadurch gekennzeichnet, daß** die ersten und zweiten kryptografischen Schlüssel Algorithmen sind, bei denen
- g0 ein Generator ist, und
- g1=g0^{x}, wobei x eine Zufallszahl ist, und
eine Nummer hᵢ=g1^{xi} wenigstens der Transaktionsstation bekannt ist,
daß die Smartcard erste und zweite Zählermittel einschließt, wobei die ersten Zählermittel so ausgebildet sind, eine Zahl zu halten, die für das Gesamttransaktionslimit repräsentativ ist, und die zweiten Zählermittel so ausgebildet sind, daß sie eine Zahl halten, die anzeigt, wie häufig der Wert des ersten Zählers erhöht worden ist, und
daß die Berechtigungsstation dazu ausgebildet ist, Geld der Smartcard hinzuzufügen, indem eine Meldung zur Smartcard gesendet wird, die die folgenden Daten enthält:
z, r, s und K,
wobei:
- H (hᵢ, z, s, K)=a eine Hash-Funktion ist,
- g0^{r}=hᵢz^{a}, und
- s die Zahl ist, die in den zweiten Zählermitteln gehalten wird,
wobei die Smartcard dazu ausgebildet ist, zu überprüfen, daß s der Zahl entspricht, die in den zweiten Zählermitteln gespeichert ist, und nach Prüfung die ersten Zählermittel um K und die zweiten Zählermittel um 1 in ihrer Zählung zu erhöhen.

2. System nach Anspruch 1, **dadurch gekennzeichnet, daß** die ersten und zweiten Zähler dazu ausgebildet sind, als Reaktion auf den Empfang der Meldung von der Berechtigungsstation in ihrer Zählung erhöht zu werden, und daß der erste Zähler dazu ausgebildet ist, in seiner Zählung als Reaktion auf eine Meldung erniedrigt zu werden, die von der Transaktionsstation empfangen wird.

3. System nach Anspruch 1 oder 2, **dadurch gekennzeichnet, daß** jedes der Transaktionszertifikate eine eindeutige Zahl trägt, die der Berechtigungsstation zugeordnet ist.

4. System nach einem vorangehenden Anspruch, **dadurch gekennzeichnet, daß** die Berechtigungsstation für einen Standort in einer Bank ausgebildet ist, die wenigstens eine Transaktionsstation für einen Standort in einem Laden ausgebildet ist, und daß das Gesamttransaktionslimit ein Geldbetrag ist.

5. System nach Anspruch 4, **dadurch gekennzeichnet, daß** die Transaktionszertifikate die folgende Information enthalten:
hᵢ, z, r, c
wobei:
- H(hᵢ, z, c)=a eine Hash-Funktion ist,
- g0^{r}=hᵢz^{a},
- z eine eindeutige Zahl ist, die in der Bank gespeichert ist und das Transaktionszertifikat identifiziert, an die sie angebracht ist, und
- c eine Meldung ist, die Information über Transaktionslimiten und -daten enthält.

6. System nach Anspruch 5, **dadurch gekennzeichnet, daß** wenigstens einige der Transaktionszertifikate auf elektronischen Speichermitteln gespeichert werden, die von der Smartcard getrennt sind.

7. Verfahren zum Durchführen von Off-Line-Transaktionen, das wenigstens eine Smartcard, eine Berechtigungsstation und wenigstens eine Transaktionsstation verwendet, bei dem asymmetrische kryptografische Codes für das Senden und Prüfen der Meldungen verwendet werden, und bei dem:
- ein erster kryptografischer Schlüssel nur in der Berechtigungsstation gehalten wird,
- ein zweiter kryptografischer Schlüssel nur in der Berechtigungsstation und der Smartcard gehalten wird, und
- ein PIN, xi, durch die Berechtigungsstation der Smartcard zugeordnet wird und nur in der Berechtigungsstation und der Smartcard gehalten wird,
wobei die Berechtigungsstation wenigstens ein Transaktionszertifikat an die Smartcard ausstellt, das verschlüsselte Daten enthält, die eine Zahl enthalten, die nur durch Bearbeitung des PIN mit dem zweiten kryptografischen Schlüssel abgeleitet werden kann, und wobei die Transaktionsstation überprüft, daß die Smartcard den zweiten kryptografischen Schlüssel trägt, **dadurch gekennzeichnet, daß** die ersten und zweiten kryptografischen Schlüssel Algorithmen sind, und
- g0 ein Generator ist,
- g1=g0^{x} ist, wobei x eine Zufallszahl ist, und
- eine Zahl hᵢ=g1^{xi} ist, die wenigstens für die Transaktion bekannt ist, und
die Smartcard erste und zweite Zählermittel einschließt, wobei die ersten Zählermittel eine Zahl halten, die für das Gesamttransaktionslimit repräsentativ ist, und die zweiten Zählermittel eine Zahl halten, die anzeigt, wie häufig der Wert des ersten Zählers erhöht worden ist, und
daß Geld der Smartcard durch die Berechtigungsstation durch Senden einer Meldung zu der Smartcard hinzugefügt wird, die die folgenden Daten aufweist:
z, r, s und K
wobei:
- H (hᵢ, z, s, K)=a, eine Hash-Funktion ist,
- g0^{r}=hᵢz^{a}, und
- s die Zahl ist, die in den zweiten Zählermitteln gehalten wird,
und daß die Smartcard überprüft, daß a der Zahl entspricht, die in den zweiten Zählermitteln gespeichert ist, und nach der Überprüfung die Zählung der ersten Zählermittel um K und der zweiten Mittel um 1 erhöht.

8. Verfahren nach Anspruch 7, **gekennzeichnet durch** das Erhöhen der Zählung der ersten und zweiten Zählermittel als Reaktion auf die Meldung, die von der Berechtigungsstation empfangen wird, und **durch** Erniedrigen der Zählung der ersten Zählermittel als Reaktion auf eine Meldung, die von der Transaktionsstation empfangen wird.

9. Verfahren nach Anspruch 7 oder 8, **dadurch gekennzeichnet, daß** jedes der Transaktionszertifikate mit einer eindeutigen Zahl versehen wird, die durch die Berechtigungsstation zugeteilt wird.

10. Verfahren nach den Ansprüchen 7-9, **gekennzeichnet durch** Ausbilden der Berechtigungsstation für einen Standort in einer Bank, und der wenigstens einen Transaktionsstation für einen Standort in einem Laden, wobei das Gesamttransaktionslimit ein Geldbetrag ist.

11. Verfahren nach Anspruch 10, **gekennzeichnet durch** Versehen der Transaktionszertifikate mit der folgenden Information:
hᵢ, z, r, c
wobei:
- H(hᵢ, z, c)=eine Hash-Funktion ist,
- g0^{r}=hᵢz^{a},
- z eine eindeutige Zahl ist, die in der Bank gespeichert ist, und das Transaktionszertifikat identifiziert, an das es angeheftet ist, und
- c eine Meldung ist, die Informationen über Transaktionslimiten und -daten enthält, und indem z bei der Bank gespeichert wird.

12. Verfahren nach Anspruch 11, **gekennzeichnet durch** Speichern von wenigstens einigen der Transaktionszertifikate in elektronischen Speichermitteln, die von der Smartcard getrennt sind.

13. Verfahren nach Anspruch 11 oder 12, **dadurch gekennzeichnet, daß** eine Transaktion durch elektronische Übertragung eines Transaktionszertifikates von der Smartcard zu der Transaktionsstation in einer Form bewirkt wird, die die folgenden Daten enthält:
hᵢ, z, r, c, Z, R, m
wobei:
- H(hᵢ, z, c)=A,
- g0^{r}=hᵢz^{a};
- H(hᵢ, z, c)=A,
- g0^{R}=hᵢz^{A}.
- m eine Meldung ist, die das Geld anzeigt, das von der Smartcard zum Laden übertragen werden soll,
und die Transaktionsstation die Gültigkeit der Beziehungen überprüft und die Transaktion annimmt.

14. Verfahren nach Anspruch 13, **dadurch gekennzeichnet, daß** die Transaktionsstation zu einer zweckmäßigen Zeit nach Vervollständigung einer Transaktion eine Meldung zur Bank überträgt, die anzeigt, daß das Geld m zum Guthaben des Ladens übertragen werden soll, anknüpfend an ein Transaktionszertifikat, das eine eindeutige Zahl z trägt.

15. Verfahren nach Anspruch 14, **gekennzeichnet durch** Speichern der Werte von z und m bei der Bank und **durch** Verwenden von z und m, falls notwendig, zum Überprüfen der Gültigkeit der Transaktion, auf die sie sich beziehen.

## Revendications

1. Système de transaction électronique comprenant au moins une carte à puce, une station d'autorisation et au moins une station de transaction, dans lequel des codes de chiffrement asymétrique sont utilisés pour la transmission et la vérification des messages et dans lequel :
- une première clé de chiffrement est détenue uniquement par ladite station d'autorisation,
- une seconde clé de chiffrement est détenue uniquement par ladite station d'autorisation et ladite carte à puce, et
- un code PIN, xi, est attribué par ladite station d'autorisation à ladite carte à puce et détenu uniquement par ladite station d'autorisation et ladite carte à puce,
ladite station d'autorisation délivrant au moins un certificat de transaction à ladite carte à puce, ledit certificat de transaction contenant des données chiffrées qui comprennent un nombre, lequel ne peut être déduit qu'en opérant sur ledit code PIN à l'aide de la seconde clé de chiffrement, et ladite station d'autorisation comprenant des moyens visant à vérifier que ladite carte à puce comporte bien ladite seconde clé de chiffrement, **caractérisé en ce que** lesdites première et seconde clés de chiffrement sont des algorithmes dans lesquels
- g0 est un générateur et
- g1 = g0^{x}, où x est nombre aléatoire et
un nombre hᵢ = g1^{xi} est connu au moins par ladite station de transaction,
**en ce que** ladite carte à puce comprend un premier et un second moyens de comptage, ledit premier moyen de comptage étant agencé de façon à détenir un nombre représentatif du total de la limite de la transaction et que ledit second moyen de comptage étant agencé de façon à détenir un nombre indiquant combien de fois la valeur dudit premier compteur a été majorée et,
**en ce que** ladite station d'autorisation est adaptée pour ajouter de l'argent à ladite carte à puce en transmettant un message à ladite carte à puce, comprenant les données suivantes :
z, r, s et K
où :
- H(hᵢ, z, s, K)=a, est une fonction de hachage,
- g0^{r}=hᵢz^{a} et
- s est le nombre détenu par ledit second moyen de comptage,
ladite carte à puce étant adaptée pour vérifier que s correspond au nombre stocké dans ledit second moyen de comptage et, après vérification, pour incrémenter ledit premier moyen de comptage de la valeur K et ledit second moyen de comptage de 1.

2. Système selon la revendication 1, **caractérisé en ce que** lesdits premier et second compteurs sont adaptés pour être incrémentés en réponse à la réception du message de ladite station d'autorisation et, **en ce que** ledit premier compteur est adapté pour être décrémenté en réponse au message de ladite station d'autorisation.

3. Système selon les revendications 1 ou 2, **caractérisé en ce que** chacun desdits certificats de transaction comporte un nombre unique attribué par ladite station d'autorisation.

4. Système selon l'une quelconque des revendications précédentes, **caractérisé en ce que** ladite station d'autorisation est destinée à être située dans une banque, au moins une desdites stations de transaction est destinée à être située dans un commerce et ladite limite de la transaction totale est une somme d'argent.

5. Système selon la revendication 4, **caractérisé en ce que** lesdits certificats de transaction comportent l'information suivante :
hᵢ, z, r, c
où :
- H(hᵢ, z, c) = a est une fonction de hachage
- g0^{r} = hᵢz^{a},
- z est un nombre unique stocké dans ladite banque, il identifie le certificat de transaction auquel il est rattaché et
- c est un message contenant l'information sur les limites et dates de la transaction.

6. Système selon la revendication 5, **caractérisé en ce que**, au moins certains des certificats de transaction sont stockés dans des moyens de stockage électronique séparés de ladite carte à puce.

7. Procédé pour mener des transactions en différé utilisant au moins une carte à puce, une station d'autorisation et au moins une station de transaction, dans lequel des codes de chiffrement asymétrique sont utilisés pour la transmission et la vérification des messages et dans lequel :
- une première clé de chiffrement est détenue uniquement par ladite station d'autorisation
- une seconde clé de chiffrement est détenue uniquement par ladite station d'autorisation et ladite carte à puce et
- un code PIN, xi est attribué par ladite station d'autorisation à ladite carte à puce et détenu uniquement par ladite station d'autorisation et ladite carte à puce,
ladite station d'autorisation délivrant au moins un certificat de transaction à ladite carte à puce, ledit certificat de transaction contenant des données chiffrées qui comprennent un nombre, lequel ne peut être déduit qu'en opérant sur ledit code PIN à l'aide de la seconde clé de chiffrement, et ladite station d'autorisation comprenant des moyens visant à vérifier que ladite carte à puce comporte bien ladite seconde clé de chiffrement, **caractérisé en ce que** lesdites première et seconde clés de chiffrement sont des algorithmes dans lesquels
- g0 est un générateur et
- g1 = g0^{x}, où x est nombre aléatoire et
un nombre hᵢ = g1^{xi} est connu au moins par ladite station de transaction, et
ladite carte à puce comprend un premier et un second moyens de comptage, ledit premier moyen de comptage détient un nombre représentatif du total de la limite de la transaction, et ledit second moyen de comptage détient un nombre indiquant combien de fois la valeur dudit premier compteur a été majorée et,
**en ce que** de l'argent est ajouté à ladite carte à puce par ladite station d'autorisation en transmettant un message à ladite carte à puce, ledit message comprenant les données suivantes :
z, r, s et K
où :
- H(hᵢ, z, s, K) = a, est une fonction de hachage,
- g0^{r} = hᵢz^{a} et
- s est le nombre détenu par ledit second moyen de comptage,
et ladite carte à puce vérifie que a correspond au nombre stocké dans ledit second moyen de comptage et, après vérification, incrémente ledit premier moyen de comptage de K et ledit second moyen de comptage de 1.

8. Procédé selon la revendication 7, **caractérisé par** l'incrémentation desdits premier et second moyens de comptage en réponse au message reçu de ladite station d'autorisation et la décrémentation dudit premier moyen de comptage en réponse à un message reçu de la station de transaction.

9. Procédé selon la revendication 7, **caractérisé en ce que** chacun desdits certificats est doté d'un numéro unique attribué par ladite station d'autorisation.

10. Procédé selon les revendications 7 à 9, **caractérisé par** la conception de ladite station d'autorisation destinée à être située dans une banque et d'au moins une desdites stations de transaction destinées à être situées dans un commerce, et ladite limite de la transaction totale est une somme d'argent.

11. Procédé selon la revendication 10, **caractérisé par** la dotation desdits certificats d'informations suivantes :
hᵢ, z, r, c
où :
- H(hᵢ, z, c) = a est une fonction de hachage
- g0^{r} = hᵢz^{a},
- z est un nombre unique stocké dans ladite banque et identifiant le certificat de transaction auquel il est rattaché, et
- c est un message contenant l'information sur les limites et dates de la transaction et par le stockage de z dans ladite banque.

12. Procédé selon la revendication 11, **caractérisé par** le stockage d'au moins un desdits certificats de transaction sur des moyens de stockage électronique séparés de ladite carte à puce.

13. Procédé selon la revendication 11 ou 12, **caractérisé en ce que** la transaction est réalisée par transfert électronique d'un certificat de transaction de ladite carte à puce à ladite station de transaction sous une forme contenant les données suivantes :
hᵢ, z, r, c, R, m
où :
- H(hᵢ, z, c) = A
- g0^{r} = hᵢz^{a};
- H(hᵢ, z, c) = A
- g0^{r} = hᵢz^{A}.
- m est un message indiquant l'argent à transférer de la carte à puce au commerce
et la station de transaction vérifiant la validité des relations et acceptant la transaction.

14. Procédé selon la revendication 13, **caractérisé par** la transmission par la station de transaction, à la date convenable après exécution de la transaction, d'un message à la banque indiquant que la somme d'argent m est à transférer au crédit dudit commerce conformément au certificat de transaction portant un numéro unique, z.

15. Procédé selon la revendication 14, **caractérisé par** le stockage des valeurs de z et m dans la banque et, l'utilisation, le cas échéant, de z et de m pour vérifier la validité de la transaction à laquelle elles font référence.
